# DEMANDE DE BREVET EUROPEEN

(11) **EP 4 274 010 A1**
(43) Date de publication de la demande: **08.11.2023**
(21) Numéro de dépôt: 22305673.0
(22) Date de dépôt: 05.05.2022
(51) Int. Cl.: H01M 50/209, H01M 50/264

(54) **ENSEMBLE POUR LA FORMATION D'UN ORGANE ÉLECTRIQUE COMPRENANT DES CELLULES ÉLECTROCHIMIQUES ET PROCÉDÉS DE MONTAGE ET DE DÉMONTAGE ASSOCIÉS**

(71) Demandeur: Automotive Cells Company SE, 92300 Levallois Perret (FR)
(72) Inventeur: MATHIEU, Alexandre, 33300 BORDEAUX (FR); BAYLAC, Johan, 33800 BORDEAUX (FR); DE ROLAND, Geoffroy, 33520 BRUGES (FR); BRIEN, Patrick, 33290 PAREMPUYRE (FR)
(74) Mandataire: Lavoix

(57) **Abrégé**

L'invention concerne un ensemble (10) pour la formation d'un organe électrique, l'ensemble (10) comprenant :
- un support (12) comportant un fond (18) et un premier (20) et un second (22) dispositifs de fixation, le premier dispositif de fixation (20) comprenant une première barre comprenant au moins une première protubérance (38), et
- au moins une cellule électrochimique (14) comprenant un premier ergot de fixation (54).

La première barre (30) est mobile en translation entre une première position initiale dans laquelle le premier ergot de fixation (54) est à distance de la première protubérance (38) et une première position finale dans laquelle le premier ergot de fixation (54) est en contact surfacique avec la première protubérance (38) et dans laquelle la cellule électrochimique (14) est maintenue à une distance prédéterminée (d) du fond (18).

## Description

La présente invention concerne un ensemble pour la formation d'un organe électrique.

L'invention s'applique particulièrement à la fabrication de batteries de véhicules électriques ou hybrides.

Une cellule électrochimique comprend un électrolyte reçu dans une enveloppe externe fermée, en général de forme sensiblement parallélépipédique. La cellule électrochimique comprend généralement des bornes en contact avec des électrodes qui sont en contact avec l'électrolyte. Les bornes sont fixées à l'enveloppe externe, à l'extérieur de ladite enveloppe.

Par exemple, la cellule électrochimique comprend un empilement d'électrodes positives reliées les unes aux autres et un empilement d'électrodes négatives reliées les unes aux autres, séparés par un séparateur. Un tel assemblage, connu sous le terme « stack », est reçu dans l'enveloppe externe.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les bornes de deux cellules voisines.

Afin d'assembler mécaniquement les cellules reliées électriquement, il est connu de les disposer alignées sur un support plan ou un rail et de les maintenir aux deux extrémités par des plaques parallèles, un tel assemblage étant désigné sous le terme « module ».

Cependant, cet assemblage ne permet pas d'extraire individuellement une cellule sans démonter ou détruire une partie importante dudit assemblage.

La présente invention a pour but de permettre la réalisation de modules avec un assemblage mécanique simplifié des cellules, ainsi qu'un démontage individuel facilité desdites cellules.

A cet effet, l'invention a pour objet un ensemble pour la formation d'un organe électrique, l'ensemble comprenant :
- un support comportant :
   - un fond comprenant une face principale et définissant une première et une seconde extrémités latérales opposées selon une direction d'assemblage, et
   - un premier et un second dispositifs de fixation s'étendant en saillie par rapport à la face principale du fond, les premier et second dispositifs de fixation étant en vis-à-vis selon la direction d'assemblage,
le premier dispositif de fixation s'étendant en saillie de la première extrémité latérale du fond et comprenant une première barre s'étendant selon une direction longitudinale perpendiculaire à la direction d'assemblage, la première barre comprenant au moins une première protubérance s'étendant en saillie selon la direction d'assemblage en direction de la seconde extrémité latérale du fond,
- au moins une cellule électrochimique comprenant une enveloppe externe s'étendant dans une première direction de cellule entre une première et une seconde faces d'extrémités et s'étendant dans une deuxième direction de cellule entre une première et une seconde faces d'assemblage, la cellule comprenant un premier ergot de fixation s'étendant en saillie de la première face d'assemblage,
la première barre étant mobile en translation selon la direction longitudinale entre une première position initiale dans laquelle le premier ergot de fixation est à distance de la première protubérance et une première position finale dans laquelle le premier ergot de fixation est en contact surfacique avec la première protubérance et dans laquelle la seconde face d'extrémité de la cellule électrochimique est maintenue à une distance prédéterminée d de la face principale du fond du support.

Suivant d'autres aspects avantageux de l'invention, l'ensemble comporte l'une ou plusieurs des caractéristiques suivantes, prises isolément ou suivant toutes les combinaisons techniquement possibles :
- la première barre est configurée de sorte que le déplacement de ladite première barre de la première position initiale à la première position finale entraine un déplacement de la cellule selon une troisième direction vers le fond du support, la troisième direction étant perpendiculaire à la direction longitudinale et à la direction d'assemblage ;
- la première protubérance comprend une première et une seconde face opposées l'une de l'autre selon la troisième direction, la seconde face étant divisée en une première et une deuxième portions planes, les première et deuxième portions planes étant inclinées l'une par rapport à l'autre, la première portion plane s'étendant sensiblement parallèle au fond;
- le premier ergot de fixation définit une première et une seconde faces opposées l'une de l'autre selon la première direction de cellule, dans la première position finale de la première barre, la première face du premier ergot de fixation s'étendant contre la première portion de la seconde face de la première protubérance;
- le premier dispositif de fixation comprend en outre une vis de serrage configurée pour entrainer la translation de la première barre entre les premières positions initiale et finale ;
- le second dispositif de fixation comprend une seconde barre s'étendant selon la direction longitudinale et comprenant au moins une seconde protubérance s'étendant en saillie selon la direction d'assemblage en direction de la première extrémité latérale du fond,
   la cellule comprenant un second ergot de fixation s'étendant en saillie de la deuxième face d'assemblage,
   la seconde barre étant mobile en translation selon la direction longitudinale (X) entre une seconde position initiale dans laquelle le second ergot de fixation est à distance de la seconde protubérance et une seconde position finale dans laquelle le second ergot de fixation est en contact surfacique avec la seconde protubérance;
- l'ensemble comprend un nombre n de cellules électrochimiques, le nombre n étant un nombre entier supérieur ou égal à 2,
   chacune des cellules électrochimiques comprenant une enveloppe externe s'étendant dans une première direction de cellule entre une première et une seconde faces d'extrémités et s'étendant dans une deuxième direction de cellule entre une première et une seconde faces d'assemblage, chacune des cellules comprenant un premier ergot de fixation s'étendant en saillie de la première face d'assemblage,
   la première barre comprenant au moins n premières protubérances s'étendant en saillie selon la direction d'assemblage en direction de la seconde extrémité latérale du fond,
   dans la première position initiale de la première barre, le premier ergot de fixation de chacune des cellules électrochimiques étant à distance des premières protubérances, et
   dans la première position finale de la première barre, le premier ergot de fixation de chacune des cellules électrochimiques étant en contact avec une des premières protubérances de la première barre;
- chacune des cellules électrochimiques comporte deux bornes électriques disposées à l'extérieur de l'enveloppe externe, l'ensemble comprenant en outre au moins un dispositif d'interconnexion apte à relier électriquement une borne électrique de deux cellules électrochimiques.

L'invention se rapporte en outre à un procédé de de montage d'un ensemble tel que décrit précédemment comprenant les étapes suivantes :
a) passer la première barre en première position initiale,
b) agencer la cellule électrochimique de sorte que la seconde face d'extrémité soit en regard de la face principale du fond du support,
c) passer la première barre en première position finale de sorte à maintenir la cellule en position contre le fond.

Suivant d'autres aspects avantageux de l'invention, le procédé comporte l'une ou plusieurs des caractéristiques suivantes, prises isolément ou suivant toutes les combinaisons techniquement possibles :
- le déplacement de la première barre de la première position initiale à la première position finale entraine le déplacement de la cellule selon la troisième direction vers le fond du support ;
- le passage de la première barre entre la première position initiale et la première position finale est réalisé par vissage d'une vis de serrage ;
- l'étape a) comprend en outre un passage de la seconde barre en seconde position initiale et l'étape c) comprend en outre un passage de la seconde barre) en seconde position finale ;
- l'étape b) comprend l'agencement des n cellules électrochimiques de sorte que la seconde face d'extrémité de chacune des cellules électrochimiques soit en regard du fond du support.

L'invention se rapporte en outre à un organe électrique comprenant : un support, des cellules électrochimiques, et au moins un dispositif d'interconnexion,
le support comportant : un fond comprenant une face principale et définissant une première et une seconde extrémités latérales opposées selon une direction d'assemblage, et un premier et un second dispositifs de fixation s'étendant en saillie par rapport à la face principale du fond, les premier et second dispositifs de fixation étant en vis-à-vis selon la direction d'assemblage,
chacune des cellules électrochimiques comprenant une enveloppe externe s'étendant dans une première direction de cellule entre une première et une seconde faces d'extrémités et s'étendant dans une deuxième direction de cellule entre une première et une seconde faces d'assemblage, chacune des cellules comprenant une borne positive et une borne négative, disposées à l'extérieur de l'enveloppe externe,
l'organe électrique étant susceptible d'être obtenu par le procédé tel que décrit précédemment,
l'une des bornes de chaque cellule étant reliée par un des dispositifs d'interconnexion à l'une des bornes d'une autre des cellules.

L'invention se rapporte en outre à un procédé de démontage d'un ensemble tel que décrit précédemment comprenant les étapes suivantes :
a) passer la première barre en première position initiale, et
b) dissocier la cellule électrochimique par un déplacement de ladite cellule selon la troisième direction perpendiculaire à la direction longitudinale et à la direction d'assemblage.

L'invention sera mieux comprise à la lecture de la description qui va suivre, donnée uniquement à titre d'exemple non limitatif et faite en se référant aux dessins sur lesquels :
- la figure 1 est une vue de détail, en perspective, d'un ensemble selon un mode de réalisation de l'invention, dans une configuration assemblée, et
- les figures 2 à 4 sont des vues schématiques, en coupe selon un plan XZ, d'étapes de montage d'un ensemble selon l'invention dans une configuration assemblée.

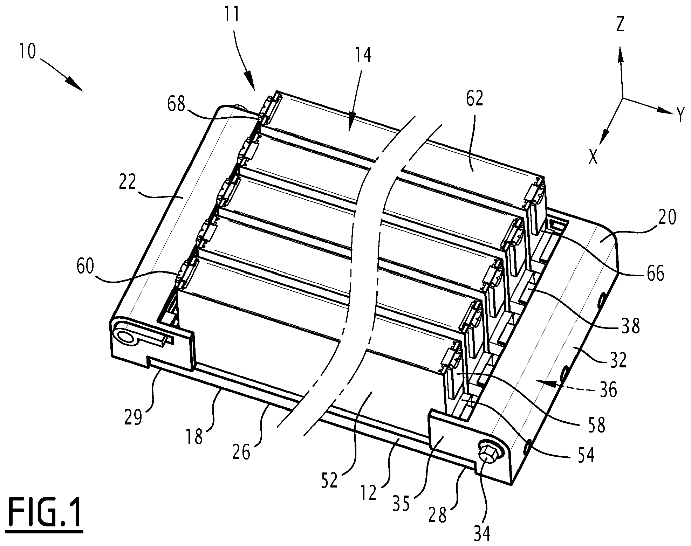

La figure 1 est une vue en perspective d'un ensemble 10 dans une configuration assemblée. L'ensemble 10 est destiné à la formation d'un organe électrique 11, de type module ou batterie.

L'ensemble 10 comprend un support 12 et au moins une cellule électrochimique 14.

Préférentiellement, l'ensemble 10 comprend un nombre n de cellules électrochimiques 14, le nombre n étant un nombre entier supérieur ou égal à 2.

Par exemple, sur le mode de réalisation de l'invention illustré sur la figure 1, l'ensemble 10 comprend un nombre n de cellules électrochimiques 14 égal à 5.

De manière optionnelle, l'ensemble 10 comprend en outre au moins un dispositif d'interconnexion 16, apte à relier électriquement une borne électrique de deux cellules électrochimiques 14.

Le support 12 comprend un fond 18 et un premier 20 et un second 22 dispositifs de fixation.

Le fond 18 est sensiblement plan et comporte une première face 24, dite face principale, et une deuxième face 26 opposée à la face principale 24.

On considère une base orthonormée (X, Y, Z) associée au support 12, la direction Z représentant la verticale. On considère que le fond 18 s'étend dans un plan (X, Y), la face principale 24 étant orientée vers le haut.

Le fond 18 définit par exemple une première 28 et une seconde 29 extrémités latérales opposées selon la direction Y, dite direction d'assemblage.

Les premier 20 et second 22 dispositifs de fixation sont solidaires du fond 18 et s'étendent en saillie par rapport à la face principale 24. Les premier 20 et second 22 dispositifs de fixation sont en vis-à-vis selon la direction d'assemblage Y.

De préférence, les premier 20 et second 22 dispositifs de fixation sont fixés de manière amovible sur le fond 18.

En particulier, chacun du premier 20 et du second 22 dispositif de fixation comprend par exemple des tenons aptes à venir s'emboiter dans des orifices définis dans chacune de la première 28 et de la seconde 29 extrémité latérale du fond 18.

Comme illustré sur la figure 1, le premier dispositif de fixation 20 s'étend par exemple en saillie de la première extrémité latérale 28 du fond 18.

Le premier dispositif de fixation 20 comprend une première barre 30 s'étendant selon la direction X, dite direction longitudinale.

De préférence, le premier dispositif de fixation 20 comprend une coque 32 dans laquelle est logée la première barre 30.

Avantageusement, le premier dispositif de fixation 20 comprend en outre une vis de serrage 34 comme cela est visible sur la figure 1.

En variante non-illustrée, le premier dispositif de fixation 20 ne comprend pas de vis de serrage 34, mais un autre moyen apte à entrainer la translation de la première barre 30, comme par exemple un système avec un ressort.

La coque 32 s'étend en saillie de la face principale 24 du fond 18 et définit, par exemple, un logement 36, s'étendant avantageusement selon la direction longitudinale X.

Par ailleurs, la coque 32 comprend de préférence deux parois extérieures 35 s'étendant selon la direction Y et opposées l'une de l'autre selon la direction X. Avantageusement, dans la configuration assemblée, les cellules 14 sont disposées selon la direction X entre les deux parois extérieures 35 de la coque 32. La coque 32 bloque ainsi la mobilité en translation selon la direction X des cellules 14 dans la configuration assemblée.

La première barre 30 s'étend, de préférence, au moins partiellement dans le logement 36 et plus particulièrement à une distance, mesurée selon la direction Z, du fond 18 non nulle.

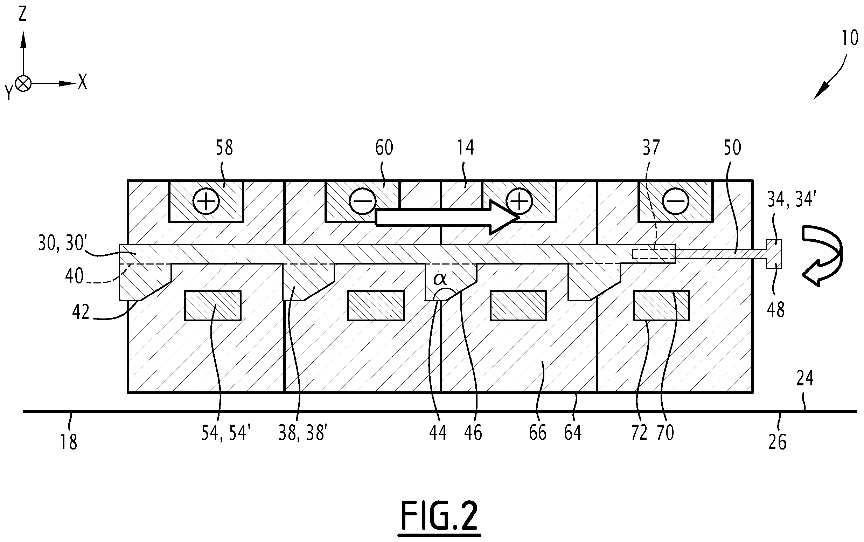

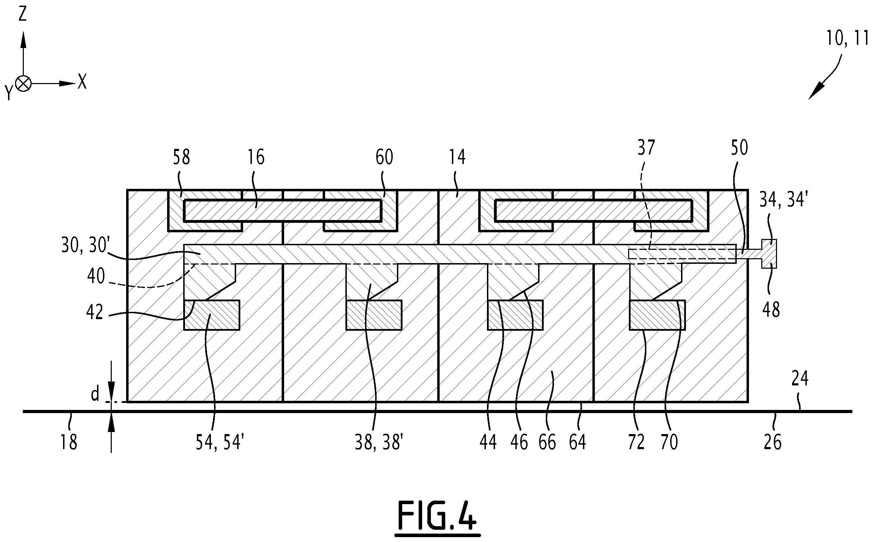

La première barre 30 est mobile en translation selon la direction longitudinale X entre une première position initiale (illustrée sur la figure 2) et une première position finale (illustrée sur la figure 4), et par exemple à l'intérieur du logement 36.

Avantageusement, la première barre 30 est configurée de sorte que le déplacement de ladite première barre 30 de la première position initiale à la première position finale entraine un déplacement de la cellule 14 selon la direction Z vers le fond 18 du support 12.

Dans le mode de réalisation illustré dans lequel le premier dispositif de fixation 20 comprend une vis de serrage 34, la première barre 30 comprend avantageusement une saignée 37 s'étendant selon la direction longitudinale X en l'une des extrémités de la première barre 30, la saignée 37 étant avantageusement au moins partiellement filetée.

La première barre 30 comprend au moins une première protubérance 38 s'étendant en saillie selon la direction d'assemblage Y.

La première barre 30 comprend de préférence une pluralité de premières protubérances 38, et en particulier au moins n premières protubérances 38 s'étendant en saillie selon la direction d'assemblage Y en direction de la seconde extrémité latérale 29 du fond 18, n étant le nombre de cellules électrochimiques 14.

Par exemple, sur le mode de réalisation de l'invention illustré sur les figures 2 à 4, la première barre 30 comprend quatre premières protubérances 38.

Chaque première protubérance 38 s'étend en saillie selon la direction d'assemblage Y, et plus particulièrement en direction de la seconde extrémité latérale 29 du fond 18.

En particulier, chaque première protubérance 38 a par exemple une largeur, mesurée selon la direction Y, comprise entre 0,4 mm et 5 cm.

Chaque première protubérance 38 s'étend avantageusement en outre en saillie de la première barre 30 selon la direction Z, et plus particulièrement en direction du fond 18.

Chaque première protubérance 38 comprend par exemple une première 40 et une seconde face 42 opposées l'une de l'autre selon la direction Z.

Comme illustré sur la figure 2, la première face 40 est de préférence liée à la première barre 30.

La seconde face 42 est avantageusement divisée en une première 44 et une deuxième 46 portions planes.

Les première 44 et deuxième 46 portions planes sont par exemple inclinées l'une par rapport à l'autre d'un angle α visible sur la figure 2. L'angle α est de préférence un angle obtus et par exemple compris entre 100° et 175°.

Dans un mode de réalisation particulier de l'invention non-illustré, les première 44 et deuxième 46 portions planes sont raccordées par un congé.

La première portion plane 44 de chaque première protubérance 38 s'étend de préférence sensiblement parallèle au fond 18, par exemple selon un plan horizontal (X, Y).

La vis de serrage 34 comprend par exemple une tête 48 et une tige filetée 50.

La vis de serrage 34 est de préférence configurée pour entrainer la translation de la première barre 30 entre les deux positions.

A cet effet, la tige filetée 50 de la vis de serrage 34 est par exemple reçue au moins partiellement dans la saignée 37 de la première barre 30 et la tête 48 de la vis 34 est fixée sur la coque 32, la mobilité en translation de la vis 34 par rapport à la coque 32 étant bloquée. Une rotation de la tête 48 de la vis 34 selon l'axe X entraine ainsi le déplacement de la première barre 30 selon l'axe X par coopération des filetages de la tige filetée 50 et de la saignée 37.

Le second dispositif de fixation 22 est de préférence sensiblement identique au premier dispositif de fixation 20, le second dispositif de fixation 22 s'étendant par exemple en saillie de la deuxième extrémité latérale 29 du fond 18 comme illustré sur la figure 1.

En particulier, le second dispositif de fixation 22 comprend une seconde barre 30' s'étendant selon la direction longitudinale X et mobile en translation selon la direction longitudinale X entre une seconde position initiale et une seconde position finale.

Avantageusement, le second dispositif de fixation 22 comprend, en outre, une seconde vis de serrage 34' configurée pour entrainer la translation de la seconde barre 30' entre les deux positions.

De préférence, la seconde barre 30' comprend au moins une seconde protubérance 38' s'étendant en saillie selon la direction d'assemblage Y en direction de la première extrémité 28 latérale du fond 18.

Chaque cellule électrochimique 14 comprend une enveloppe externe 52, un premier ergot de fixation 54 et de préférence un second ergot de fixation 54'.

Chaque cellule électrochimique 14 comprend, en outre, avantageusement au moins une borne 58, 60 électrique, disposée à l'extérieur de ladite enveloppe externe 52. Plus précisément, chaque cellule 14 comporte de préférence une borne positive 58 et une borne négative 60.

L'enveloppe externe 52 présente par exemple une forme générale sensiblement parallélépipédique.

Plus particulièrement, l'enveloppe externe 52 s'étend dans une première direction de cellule entre une première 62 et une seconde 64 faces d'extrémité. Dans la configuration assemblée de la figure 1, la première direction de cellule est parallèle à la direction Z.

Plus précisément, lesdites faces d'extrémité 62, 64 sont sensiblement planes et parallèles entre elles.

Dans la configuration assemblée, les première 62 et seconde 64 faces d'extrémité sont disposées dans des plans (X, Y), la seconde face d'extrémité 64 s'étendant sensiblement en regard du fond 18, comme cela est visible sur les figures 2 à 4.

Par ailleurs, l'enveloppe externe 52 s'étend dans une deuxième direction de cellule entre une première 66 et une seconde 68 faces d'assemblage. Dans la configuration assemblée de la figure 1, la deuxième direction de cellule est parallèle à la direction d'assemblage Y.

Plus précisément, lesdites faces d'assemblage 66, 68 sont sensiblement planes et parallèles entre elles, reliant les première 62 et seconde 64 faces d'extrémité entre elles.

Dans la configuration assemblée, les première 66 et seconde 68 faces d'assemblage sont disposées dans des plans (X, Z), la première 66, respectivement la seconde 68, face d'assemblage s'étendant sensiblement en regard du premier 20, respectivement du second 22, dispositif de fixation, comme cela est visible sur la figure 1.

Le premier ergot de fixation 54 s'étend en saillie de la première face d'assemblage 66, en particulier selon la deuxième direction de cellule, qui est parallèle à la direction d'assemblage Y en configuration assemblée.

Le premier ergot de fixation 54 présente par exemple une forme générale sensiblement parallélépipédique.

Le premier ergot de fixation 54 définit par exemple une première 70 et une seconde 72 faces opposées l'une de l'autre selon la première direction de cellule, qui est parallèle à la direction Z en configuration assemblée. La première 70 et seconde faces 72 sont sensiblement planes et parallèles entre elles et sont disposées dans des plans (X, Y) dans la configuration assemblée, la seconde face 72 s'étendant sensiblement en regard du fond 18, comme cela est visible sur les figures 2 à 4.

Dans un mode de réalisation particulier de l'invention non-illustré, la première face 70 du premier ergot de fixation 54 est divisée en une première et une deuxième portions planes, par exemple inclinées l'une par rapport à l'autre d'un angle obtus, par exemple compris entre 100° et 175°.

Dans la première position initiale de la première barre 30 comme illustrée sur la figure 2, le premier ergot de fixation 54 de chaque cellule 14 est à distance de la première protubérance 38 ou de chaque première protubérance 38 de la première barre 30.

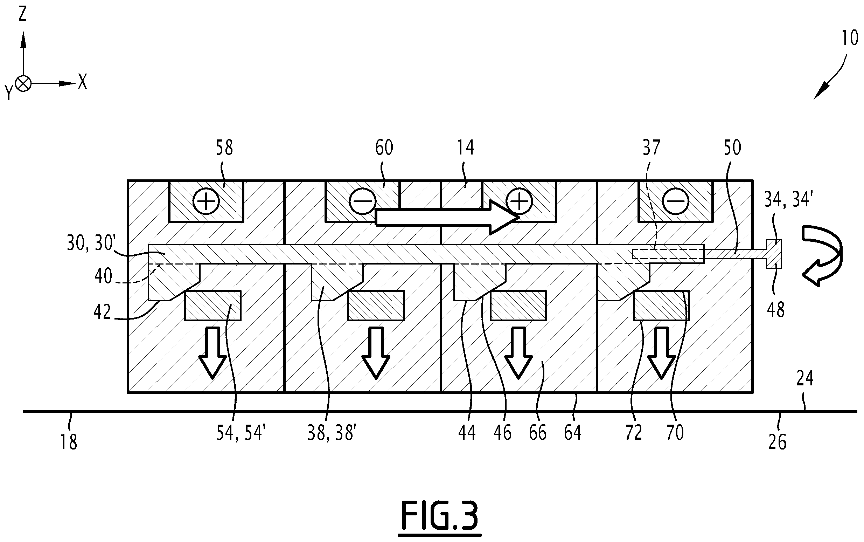

Dans cette position, chaque cellule 14 peut ainsi être déplacée selon la direction Z, et par exemple vers le haut, sans toucher les premières protubérances 38 de la première barre 30. Dans des positions intermédiaires de la première barre 30 comme illustrées sur la figure 3, le premier ergot de fixation 54 de chaque cellule 14 est en contact avec la première protubérance 38 ou l'une des premières protubérances 38 de la première barre 30.

Plus précisément, la première face 70 de chaque premier ergot de fixation 54 est en contact avec la deuxième portion 46 de la seconde face 42 de l'une des premières protubérances 38. Ainsi, lors du déplacement de la première barre 30 de la première position initiale à la première position finale, la deuxième portion inclinée 46 de chacun des premières protubérances 38 glisse sur l'extrémité correspondante de la première face 70 de chaque premier ergot de fixation 54. Ceci a pour effet de pousser chaque premier ergot 54 et donc chaque cellule 14 selon la direction Z, en particulier en direction du fond 18 comme cela est illustré sur la figure 3, et de préférence jusqu'à ce que la seconde face d'extrémité 64 de chaque cellule 14 soit à une distance prédéterminée d de la face principale 24 du fond 18. La seconde face d'extrémité 64 de chaque cellule 14 est par exemple pousser jusqu'à venir en contact avec une butée déterminant ladite distance d.

Dans la première position finale de la première barre 30 comme illustrée sur la figure 4, le premier ergot de fixation 54 de chaque cellule 14 est en contact surfacique avec la première protubérance 38 ou l'une des premières protubérances 38 de la première barre 30, la seconde face d'extrémité 64 de chaque cellule électrochimique 14 étant maintenue à la distance prédéterminée d de la face principale 24 du fond 18 du support 12.

Plus précisément, dans la première position finale, la première face 70 de chaque premier ergot de fixation 54 s'étend contre la première portion 44 de la seconde face 42 de l'une des premières protubérances 38. La mobilité en translation selon la direction Z des cellules 14 dans la configuration assemblée est ainsi bloquée. Le second ergot de fixation 54' de chaque cellule 14 est de préférence sensiblement symétrique au premier ergot de fixation 54 selon un plan perpendiculaire à la deuxième direction de cellule.

En particulier, le second ergot de fixation 54' s'étend en saillie de la deuxième face d'assemblage 68, en particulier selon la deuxième direction de cellule.

De préférence, dans la seconde position initiale de la seconde barre 30', le second ergot de fixation 54' de chaque cellule 14 est à distance de la seconde protubérance 38' ou de chaque seconde protubérance 38' de la seconde barre 30'. Dans la seconde position finale de la seconde barre 30', le second ergot de fixation 54' de chaque cellule 14 est en contact surfacique avec la seconde protubérance 38' ou l'une des secondes protubérances 38' de la seconde barre 30'.

Dans le mode de réalisation représenté sur la figure 1, chacune des bornes 58, 60 électriques de la cellule 14 électrochimique est disposée sur l'une des première 66 et seconde 68 faces d'assemblage, de sorte que les bornes positive 58 et négative 60 soient à l'opposé l'une de l'autre.

En variante non représentée, les bornes électriques sont disposées sur la même face d'assemblage, ou encore sur la première face d'extrémité 62 de l'enveloppe externe 52.

Un procédé de montage de l'ensemble 10, dans la configuration assemblée de la figure 1, va maintenant être décrit.

On considère qu'au début du procédé de montage, la ou les cellule(s) 14 électrochimique(s) sont dissociées du support 12.

Tout d'abord, le procédé de montage comprend une étape a), dans laquelle la première barre 30 du premier dispositif de fixation 20 est passée en première position initiale.

Plus précisément, cette étape a) est réalisée par vissage de la vis de serrage 34.

De préférence, l'étape a) comprend en outre un passage de la seconde barre 30' du second dispositif de fixation 22 en seconde position initiale.

Ensuite, le procédé de montage comprend une étape b), dans laquelle chaque cellule électrochimique 14 est agencée de sorte que la seconde face d'extrémité 64 soit en regard de la face principale 24 du fond 18 du support 12.

De préférence, l'étape b) comprend l'agencement des n cellules électrochimiques 14 de sorte que la seconde face d'extrémité 64 de chacune des cellules électrochimiques 14 soit en regard de la face principale 24 du fond 18 du support 12.

Comme illustré sur la figure 2, chaque cellule 14 est ainsi en une configuration assemblée avec le support 12.

Avantageusement, les cellules 14 sont agencées, de sorte que leur première face d'extrémité 62 soient coplanaires. En outre, la borne positive 58 de chaque cellule 14 est avantageusement située proche de la borne négative 60 d'une cellule 14 adjacente, comme cela est visible sur la figure 2.

Le procédé de montage comprend ensuite une étape c), dans laquelle la première barre 30 du premier dispositif de fixation 20 est passée en première position finale, de sorte à maintenir chaque cellule 14 en position contre le fond 18.

Plus précisément, le passage de la première barre 30 de la première position initiale à la première position finale est réalisée par vissage de la vis de serrage 34.

En variante, le passage de la première barre 30 de la première position initiale à la première position finale est réalisée par un autre moyen apte à entrainer la translation de la première barre 30, comme par exemple un système avec un ressort.

Avantageusement, le déplacement de la première barre 30 de la première position initiale à la première position finale entraine le déplacement de chaque cellule 14 selon la direction Z vers le fond 18 du support 12.

Plus particulièrement, lors du passage de la première barre 30 de la première position initiale à la première position finale, la première barre 30 occupe des positions intermédiaires. Dans les positions intermédiaires de la première barre 30 comme illustrées sur la figure 3, le contact entre la première face 70 de chaque premier ergot de fixation 54 avec la deuxième portion 46 de la seconde face 42 de l'une des premières protubérances 38 pousse chaque cellule 14 selon la direction Z, en particulier en direction du fond 18, de préférence jusqu'à ce que la seconde face d'extrémité 64 de la cellule 14 soit à la distance d de la face principale 24 du fond 18.

De préférence, dans la première position finale de la première barre 30 comme illustrée sur la figure 4, le contact surfacique entre le premier ergot de fixation 54 de chaque cellule 14 avec l'une des première protubérances 38 de la première barre 30 autorise un maintien de la seconde face d'extrémité 64 de chaque cellule électrochimique 14 à la distance d de la face principale 24 du fond 18 du support 12.

De préférence, l'étape c) comprend en outre un passage de la seconde barre 30' en seconde position finale.

Ainsi, chaque cellule 14 est avantageusement maintenue contre le fond 18 du support 12.

Afin de réaliser l'organe électrique 11 décrit précédemment avec l'ensemble 10 ainsi monté, les cellules 14 sont ensuite reliées électriquement par des dispositifs d'interconnexion 16, et de préférence deux à deux.

A cet effet, l'une des bornes 58 de chaque cellule 14 est reliée par un des dispositifs d'interconnexion 16 à l'une des bornes 60 d'une autre des cellules 14.

Dans l'exemple représenté à la figure 4, la borne positive 58 de chaque cellule 14 est reliée par un des dispositifs d'interconnexion 16 à la borne négative 60 d'une autre cellule 14, de préférence la cellule 14 adjacente. Les cellules 14 sont ainsi reliées en série.

Le mode de réalisation représenté illustre le cas de cellules 14 reliées en série. Cependant, le support 12 permet avantageusement également un assemblage avec des cellules 14 électrochimiques pour un montage électrique en parallèle.

L'ensemble 10 et l'organe électrique 11 décrits ci-dessus permettent de manière avantageuse un démontage individuel de l'une des cellules électrochimiques 14, par exemple pour maintenance ou remplacement.

Un procédé de démontage est décrit ci-après, pour lequel on considère le cas d'une cellule 14 dont l'emplacement est quelconque selon la direction longitudinale X dans le support 12.

Tout d'abord, le ou les dispositifs 16 d'interconnexion, éventuellement reliés à la cellule 14 concernée, sont dissociés de ladite cellule.

Ensuite, la première barre 30 du premier dispositif de fixation 20 est passée en première position initiale. Le premier ergot de fixation 54 de chacun des cellules 14 est ainsi à distance de chaque première protubérance 38 de la première barre 30.

De même, la seconde barre 30' du second dispositif de fixation 22 est de préférence passée en seconde position initiale.

La seconde face d'extrémité 64 des cellules 14 n'est plus maintenue en position contre le fond 18 du support 12.

La cellule 14 concernée peut être facilement dissociée du support 12, notamment par un déplacement selon la direction Z.

En particulier, la cellule 14 peut être retirée par un déplacement vers le haut selon la direction Z sans toucher les premières protubérances 38 de la première barre 30 et les deuxièmes protubérances 38' de la seconde barre 30'.

Ce procédé de démontage permet de remplacer individuellement des cellules 14 dans l'organe électrique 11 réalisé à partir de l'ensemble 10, ce qui facilite l'entretien dudit organe électrique 11.

## Revendications

1. Ensemble (10) pour la formation d'un organe électrique (11), l'ensemble (10) comprenant :
- un support (12) comportant :
- un fond (18) comprenant une face principale (24) et définissant une première (28) et une seconde (29) extrémités latérales opposées selon une direction d'assemblage (Y), et
- un premier (20) et un second (22) dispositifs de fixation s'étendant en saillie par rapport à la face principale (24) du fond (18), les premier (20) et second (22) dispositifs de fixation étant en vis-à-vis selon la direction (Y) d'assemblage,
le premier dispositif de fixation (20) s'étendant en saillie de la première extrémité latérale (28) du fond (18) et comprenant une première barre (30) s'étendant selon une direction longitudinale (X) perpendiculaire à la direction d'assemblage (Y), la première barre (30) comprenant au moins une première protubérance (38) s'étendant en saillie selon la direction d'assemblage (Y) en direction de la seconde extrémité latérale (29) du fond (18),
- au moins une cellule électrochimique (14) comprenant une enveloppe externe (52) s'étendant dans une première direction de cellule entre une première (62) et une seconde (64) faces d'extrémités et s'étendant dans une deuxième direction de cellule entre une première (66) et une seconde (68) faces d'assemblage, la cellule (14) comprenant un premier ergot de fixation (54) s'étendant en saillie de la première face d'assemblage (66),
la première barre (30) étant mobile en translation selon la direction longitudinale (X) entre une première position initiale dans laquelle le premier ergot de fixation (54) est à distance de la première protubérance (38) et une première position finale dans laquelle le premier ergot de fixation (54) est en contact surfacique avec la première protubérance (38) et dans laquelle la seconde face d'extrémité (64) de la cellule électrochimique (14) est maintenue à une distance prédéterminée (d) de la face principale (24) du fond (18) du support (14).

2. Ensemble (10) selon la revendication 1, dans lequel la première barre (30) est configurée de sorte que le déplacement de ladite première barre (30) de la première position initiale à la première position finale entraine un déplacement de la cellule (14) selon une troisième direction (Z) vers le fond du support, la troisième direction (Z) étant perpendiculaire à la direction longitudinale (X) et à la direction d'assemblage (Y).

3. Ensemble (10) selon la revendication 1 ou 2, dans lequel la première protubérance (38) comprend une première (40) et une seconde face (42) opposées l'une de l'autre selon la troisième direction (Z), la seconde face (42) étant divisée en une première (44) et une deuxième (46) portions planes, les première (44) et deuxième (46) portions planes étant inclinées l'une par rapport à l'autre, la première portion plane (44) s'étendant sensiblement parallèle au fond (18).

4. Ensemble (10) selon la revendication 3, dans lequel, le premier ergot de fixation (54) définit une première (70) et une seconde (72) faces opposées l'une de l'autre selon la première direction de cellule, dans la première position finale de la première barre (30), la première face (70) du premier ergot de fixation (54) s'étendant contre la première portion (44) de la seconde face (42) de la première protubérance (38).

5. Ensemble (10) selon l'une des revendications précédentes, dans lequel le premier dispositif de fixation (20) comprend en outre une vis de serrage (34) configurée pour entrainer la translation de la première barre (30) entre les premières positions initiale et finale.

6. Ensemble (10) selon l'une des revendications précédentes, dans lequel le second dispositif de fixation (22) comprend une seconde barre (30') s'étendant selon la direction longitudinale (X) et comprenant au moins une seconde protubérance (38') s'étendant en saillie selon la direction d'assemblage (Y) en direction de la première extrémité latérale (28) du fond (18),
la cellule (14) comprenant un second ergot de fixation (54') s'étendant en saillie de la deuxième face d'assemblage (68),
la seconde barre (30') étant mobile en translation selon la direction longitudinale (X) entre une seconde position initiale dans laquelle le second ergot de fixation (54') est à distance de la seconde protubérance (38') et une seconde position finale dans laquelle le second ergot de fixation (54') est en contact surfacique avec la seconde protubérance (38').

7. Ensemble (10) selon l'une des revendications précédentes comprenant un nombre n de cellules électrochimiques (14), le nombre n étant un nombre entier supérieur ou égal à 2,
chacune des cellules électrochimiques (14) comprenant une enveloppe externe (52) s'étendant dans une première direction de cellule entre une première (62) et une seconde (64) faces d'extrémités et s'étendant dans une deuxième direction de cellule entre une première (66) et une seconde (68) faces d'assemblage, chacune des cellules (14) comprenant un premier ergot de fixation (54) s'étendant en saillie de la première face d'assemblage (66),
la première barre (30) comprenant au moins n premières protubérances (38) s'étendant en saillie selon la direction d'assemblage (Y) en direction de la seconde extrémité latérale (29) du fond (18),
dans la première position initiale de la première barre (30), le premier ergot de fixation (54) de chacune des cellules électrochimiques (14) étant à distance des premières protubérances (38), et
dans la première position finale de la première barre (30), le premier ergot de fixation (54) de chacune des cellules électrochimiques (14) étant en contact avec une des premières protubérances (38) de la première barre (30).

8. Ensemble (10) selon la revendication 7, dans lequel chacune des cellules électrochimiques (14) comporte deux bornes électriques (58,60) disposées à l'extérieur de l'enveloppe externe (52), l'ensemble (10) comprenant en outre au moins un dispositif d'interconnexion (16) apte à relier électriquement une borne électrique (58, 60) de deux cellules électrochimiques (14).

9. Procédé de montage d'un ensemble (10) selon l'une des revendications précédentes comprenant les étapes suivantes :
a) passer la première barre (30) en première position initiale,
b) agencer la cellule électrochimique (14) de sorte que la seconde face d'extrémité (64) soit en regard de la face principale (24) du fond (18) du support (12),
c) passer la première barre (30) en première position finale de sorte à maintenir la cellule (14) en position contre le fond (18).

10. Procédé selon la revendication 9, dans lequel le déplacement de la première barre (30) de la première position initiale à la première position finale entraine le déplacement de la cellule (14) selon la troisième direction (Z) vers le fond (18) du support (12).

11. Procédé selon la revendication 9 ou 10, dans lequel le passage de la première barre (30) entre la première position initiale et la première position finale est réalisé par vissage d'une vis de serrage (34).

12. Procédé selon l'une des revendications 9 à 11, dans lequel l'ensemble (10) est selon la revendication 6, l'étape a) comprenant en outre un passage de la seconde barre (30') en seconde position initiale et l'étape c) comprenant en outre un passage de la seconde barre (30') en seconde position finale.

13. Procédé selon l'une des revendications 9 à 12, dans lequel l'ensemble (10) est selon l'une des revendications 7 à 9, l'étape b) comprenant l'agencement des n cellules électrochimiques (14) de sorte que la seconde face d'extrémité (64) de chacune des cellules électrochimiques (14) soit en regard du fond (18) du support (14).

14. Organe électrique (11) de type module ou batterie comprenant : un support (12), des cellules électrochimiques (14), et au moins un dispositif d'interconnexion (16),
le support (12) comportant : un fond (18) comprenant une face principale (24) et définissant une première (28) et une seconde (29) extrémités latérales opposées selon une direction d'assemblage (Y), et un premier (20) et un second (22) dispositifs de fixation s'étendant en saillie par rapport à la face principale (24) du fond (18), les premier (20) et second (22) dispositifs de fixation étant en vis-à-vis selon la direction (Y) d'assemblage,
chacune des cellules électrochimiques (14) comprenant une enveloppe externe (52) s'étendant dans une première direction de cellule entre une première (62) et une seconde (64) faces d'extrémités et s'étendant dans une deuxième direction de cellule entre une première (66) et une seconde (68) faces d'assemblage, chacune des cellules (14) comprenant une borne (58) positive et une borne (60) négative, disposées à l'extérieur de l'enveloppe externe (52),
l'organe électrique étant susceptible d'être obtenu par un procédé selon la revendication 13,
l'une des bornes (58) de chaque cellule (14) étant reliée par un des dispositifs d'interconnexion (16) à l'une des bornes (60) d'une autre des cellules (14).

15. Procédé de démontage d'un ensemble (10) selon l'une des revendications 1 à 8 comprenant les étapes suivantes :
a) passer la première barre (30) en première position initiale, et
b) dissocier la cellule électrochimique (14) par un déplacement de ladite cellule (14) selon la troisième direction (Z) perpendiculaire à la direction longitudinale (X) et à la direction d'assemblage (Y).
